# EUROPEAN PATENT APPLICATION

(11) **EP 2 431 198 A1**
(43) Date of publication of application: **21.03.2012**
(21) Application number: 09844662.8
(22) Date of filing: 14.05.2009
(51) Int. Cl.: B60C 27/04, B60C 27/10, B60C 27/20

(54) **ANTI-SLIP DEVICE FOR MOUNTING ON PNEUMATIC TIRE**

(71) Applicant: Autotrax International Pte., Ltd, Singapore 629908 (SG)
(72) Inventor: KIM, Jung Ho, Seoul 156-773 (KR)
(74) Representative: Rees, Alexander Ellison
(86) International application number: PCT/KR2009/002556
(87) International publication number: WO 2010/131788

(57) **Abstract**

Provided is a tire mounted anti-skid apparatus, in which a fixing plate is attached to a tire wheel through adaptors, and a support plate has a plurality of anti-skid arms is fitted to the fixing plate and is fixed on a side of the tire by a locking plate. Each adaptor includes a fix clip having a clip and a cap, and first and second bolts. The clip is fitted around a wheel nut of a wheel of the tire and including six legs separated from one another, a nut hole in a rear thereof, and protrusions, each of which protrudes from a leading end of the leg in an outward direction, and the cap covers the clip, causes an inner circumference thereof to press the protrusions of the clip, and includes a cylindrical cap having a nut hole communicating with the nut hole of the clip in a rear thereof. The first bolt includes a threaded part having a shape of a protruding shaft at a leading end thereof and screwed into the communicating nut holes of the clip and the cap, and a nut hole in a trailing end thereof. The second bolt is screwed to the nut hole of the trailing end of the first bolt through a fixing hole formed in the fixing plate disposed on the first bolt so as to fix the fixing plate.

## Description

### [Technical Field]

The present invention relates, in general, to a tire mounted anti-skid apparatus, and more particularly, to a tire mounted anti-skid apparatus, which can be easily mounted on a tire so as to permit safe driving on a snowy or icy road and be widely used for tires having various sizes.

### [Background Art]

In general, integrated chains, each of which is connected by chains, cables, or urethane blocks, snow tires, or spike tires are used for a snowy or icy road.

In the case ofthe integrated chains, driving with the chains causes much damage to roads. The damaged roads have a chance to cause an accident. For this reason, the integrated chains are prohibited by law from being used for an expressway.

Further, when the integrated chains are mounted on drive wheels, the wheels should be rotated. Thus, the mounting work is very difficult and complicated. It is no easy thing for an adult man to correctly firmly mount the integrated chains on a cold day in winter. As such, the integrated chains are separated from the wheels or are lost during driving, which leads to an accident. In most cases, once the integrated chains are used, they suffer such damage that they cannot be used again.

Meanwhile, in the case of the snow tires or the spike tires, it is difficult to rapidly carry out a change of tires in road conditions caused by an abrupt change of weather. Thus, after dangerous driving of vehicles to a garage, the change oftires should be carried out in the garage. Further, the snow tires or the spike tires are expensive in themselves, and reduce fuel efficiency, that is, cause the dissipation of energy.

### [Disclosure]

### [Technical Problem]

Accordingly, the present invention has been made in an effort to solve the problems occurring in the related art, and an object ofthe present invention is to provide a tire mounted anti-skid apparatus, which can be easily mounted on a tire so as to permit safe driving on a snowy or icy road and be widely used for tires having various sizes.

### [Technical Solution]

In order to achieve the above objects, according to one aspect ofthe present invention, there is provided a tire mounted anti-skid apparatus, which includes a fixing plate attached to a tire wheel through adaptors, and a support plate having a plurality of anti-skid arms fitted to the fixing plate and is fixed on a side of the tire by a locking plate. Each adaptor includes: a fix clip having a clip and a cap, the clip being fitted around a wheel nut of a wheel of the tire and including six legs separated from one another, a nut hole in a rear thereof, and protrusions, each of which protrudes from a leading end of the leg in an outward direction, and the cap covering the clip, causing an inner circumference thereof to press the protrusions ofthe clip, and including a cylindrical cap having a nut hole communicating with the nut hole of the clip in a rear thereof; a first bolt including a threaded part having a shape of a protruding shaft at a leading end thereof and screwed into the communicating nut holes of the clip and the cap, and a nut hole in a trailing end thereof; and a second bolt screwed to the nut hole of the trailing end of the first bolt through a fixing hole formed in the fixing plate disposed on the first bolt so as to fix the fixing plate. The support plate includes: a disc-shaped body that has an insertion hole formed in the center thereof, is fitted through the insertion hole, and is fixed between the fixing plate and the locking plate; and a plurality of connectors radially disposed on a circumference ofthe body. Each anti-skid arm includes: a mount part that is detachably fitted into each connector, and a contact part that is bent from one end of the mount part and has a plurality of spikes contacted with the road when mounted on the tire to increase friction against a snowy or icy rod. The fixing plate includes: a through-hole formed in a central portion thereof such that the wheel of the tire is located; hook steps protruding outwards from an inner circumference of the through-hole and arranged at regular intervals in a radial direction; hook parts formed in insertion holes between the hook steps; and a plurality of fixing holes formed around the through-hole. The locking plate includes: a circular protrusion inserted into the through-hole ofthe fixing plate; fixing steps formed on an outer circumference of the circular protrusion so as to be engaged with the hook steps when inserted into and turned in the insertion holes of the fixing plate; and means for restricting the engagement of the hook steps and the fixing steps from being released, the restricting means including an installation hole formed in the center ofthe circular protrusion, a restrictor slidably fitted into the installation hole and having restriction protrusions so as to restrict the hook steps to prevent rotation of the locking plate when the locking plate is engaged with the fixing plate, and a spring disposed between the restrictor and the installation hole such that the restrictor is biased in an upward direction.

In exemplary embodiments, among the connectors, a pair of neighboring connectors may include rotating holes into which rotary discs having a plurality of fitting holes formed at regular intervals are rotatably fitted, and the remaining connectors may include a plurality of fitting holes formed at regular intervals. The mount part of each anti-skid arm may be inserted into the fitting hole, and include a coupling step at one end thereof so as to be hooked in the fitting hole when inserted into the fitting hole.

In exemplary embodiments, the contact part may further include a ridge protruding from an edge of an inner surface thereof in order to increase a binding force with the tire.

In exemplary embodiments, the plurality of connectors may include fitting holes having a predetermined width in a radial direction, and guides protruding outwards from both sides ofthe fitting holes. The mount parts of the anti-skid arms may be inserted into the fitting holes, be bent upwards to form a U-shaped cross-section, be formed such that upper surfaces thereof have a width larger than that of the fitting holes, be prevented from being separated by causing both upper side surfaces thereof to be hooked on the guides after being inserted into the fitting holes, and be allowed to slide in a radial direction after being inserted into the fitting holes.

In exemplary embodiments, the contact part of each anti-skid arm may include a plurality of chain holes formed on both sides thereof in a lengthwise direction. The tire mounted anti-skied apparatus may further include a plurality of spike mounting plates, which are disposed between the anti-skid arms, and each of which includes a plurality of spikes to increase friction against a snowy or icy road and chain holes corresponding to the chain holes of each anti-skid arm and formed on both sides thereof in a lengthwise direction. The anti-skid arms and the spike mounting plates may be connected by chains, opposite ends of each of which are inserted into the chain holes ofthe contact parts and the spike mounting plates. Each spike mounting plate may have a plurality of chain holes, which are formed in a direction perpendicular to a lengthwise direction thereof, and to which the ends of the chains are selectively coupled so as to adjust a mounting length ofthe chains.

According to another aspect of the present invention, there is provided a tire mounted anti-skid apparatus, which includes: a plurality of textile arms extending in a direction crossing a circumferential direction of a tire, and partially surrounding an outer surface of the tire; circular pocket parts having pocket parts which are formed at opposite ends of each textile arm and into which elastic members are inserted, the pocket parts extending through the ends of each textile arm to form a circular shape on the whole; the circular elastic members inserted into the circular pocket parts; plastic pads fixed to outer surfaces ofthe textile arms and having a plurality of spikes; and chains connected between the plastic pads.

In exemplary embodiments, each elastic member may include a core made of silicon rubber and a textile sheath surrounding the core.

In exemplary embodiments, the tire mounted anti-skid apparatus may further include coupling plates coupled with the plastic pads on rear surfaces ofthe textile arms with the textile arm interposed between the plastic pad and the coupling plate. The plastic pads may be coupled with the coupling plates by the spikes. Each spike may include conical parts on opposite sides thereof, and a shaft between the conical parts. Each plastic pad and each coupling plate may include spike holes corresponding to each other. Each plastic pad and each coupling plate may include spike retainers surrounding the spikes around the spike holes in which steps are formed respectively, and each step may include a hole in the center thereof such that the shaft of each spike is fitted therein.

In exemplary embodiments, each circular pocket part may be coupled with tightening belts, each of which is looped over the circular pocket part between ends of the textile arms facing each other and pulls and tightens the circular pocket part. Each tightening belt may be a flat belt, and include a plurality of fixing holes in a lengthwise direction in one end thereof and a hook inserted into one of the fixing holes at the other end thereof.

### [Advantageous Effects]

According to the tire mounted anti-skid apparatus as described above, it can be easily mounted on a tire so as to allow safe driving on a snowy or icy road, and be widely used for tires having various sizes.

### [Description of Drawings]

FIG. 1 is a disassembled perspective view illustrating the state before a tire mounted anti-skid apparatus according to a first exemplary embodiment of the present invention is mounted on a tire.
FIG. 2 is a disassembled perspective view illustrating a fix clip applied to a tire mounted anti-skid apparatus according to a first exemplary embodiment of the present invention.
FIG. 3 illustrates a fixing plate applied to a tire mounted anti-skid apparatus according to a first exemplary embodiment ofthe present invention.
FIG. 4 is an assembled perspective view illustrating the state after a tire mounted anti-skid apparatus according to a first exemplary embodiment ofthe present invention is mounted on a tire.
FIG. 5 is a perspective view illustrating a support plate applied to a tire mounted anti-skid apparatus according to a first exemplary embodiment ofthe present invention.
FUGS. 6 through 8 are a perspective view, a top-down view, and a bottom-up view illustrating a rotary disc applied to a tire mounted anti-skid apparatus according to a first exemplary embodiment of the present invention.
FIG. 9 is a disassembled perspective view illustrating one example of a connector of an anti-skid arm applied to a tire mounted anti-skid apparatus according to a first exemplary embodiment of the present invention.
FIG. 10 is an assembled cross-sectional view of FTG. 9.
FIG. 11 is a disassembled perspective view illustrating another example of a connector of an anti-skid arm applied to a tire mounted anti-skid apparatus according to a first exemplary embodiment of the present invention.
FIG. 12 is an assembled cross-sectional view of FIG. 11.
FIG. 13 is a disassembled perspective view illustrating a locking plate applied to a tire mounted anti-skid apparatus according to a first exemplary embodiment ofthe present invention.
FIG. 14 is a perspective view illustrating an anti-skid arm applied to a tire mounted anti-skid apparatus according to a first exemplary embodiment ofthe present invention.
FIG. 15 is atop-down view illustrating an anti-skid arm applied to a tire mounted anti-skid apparatus according to a first exemplary embodiment ofthe present invention.
FIG. 16 is a view for explaining how a tire mounted anti-skid apparatus according to a first exemplary embodiment ofthe present invention is mounted on a tire.
FIG. 17 is a perspective view of a tire mounted anti-skid apparatus according to a second exemplary embodiment of the present invention.
FIG. 18 is a perspective view of a support plate applied to the tire mounted anti-skid apparatus according to a second exemplary embodiment of the present invention.
FIG. 19 is a perspective view of an anti-skid arm applied to the tire mounted anti-skid apparatus according to a second exemplary embodiment of the present invention.
FIGS. 20 to 22 are views illustrating coupling between a support plate and an anti-skid arm applied to the tire mounted anti-skid apparatus according to a second exemplary embodiment ofthe present invention.
FIG. 23 is a view illustrating coupling between an anti-skid arm and a spike mounting plate applied to the tire mounted anti-skid apparatus according to a second exemplary embodiment ofthe present invention.
FIG. 24 is a perspective view ofthe spike mounting plate applied to the tire mounted anti-skid apparatus according to a second exemplary embodiment ofthe present invention.
FIG. 25 is a perspective view illustrating the state in which a tire mounted anti-skid apparatus according to a third exemplary embodiment ofthe present invention is mounted on a tire.
FIG. 26 is a partial cross-sectional view illustrating the state in which a tire mounted anti-skid apparatus according to a third exemplary embodiment ofthe present invention is mounted on a tire.
FIG. 27 illustrates a tightening belt in a tire mounted anti-skid apparatus according to a third exemplary embodiment ofthe present invention.
FIG. 28 illustrates the state after tightening belts are coupled in a tire mounted anti-skid apparatus according to a third exemplary embodiment of the present invention.
FIG. 29 illustrates a plastic pad in a tire mounted anti-skid apparatus according to a third exemplary embodiment of the present invention.
FIG. 30 is a cross-sectional view illustrating the state before a plastic pad is coupled in a tire mounted anti-skid apparatus according to a third exemplary embodiment of the present invention.
FIG. 31 is a cross-sectional view illustrating the state after a plastic pad is coupled in a tire mounted anti-skid apparatus according to a third exemplary embodiment of the present invention.

### [Modes for Invention]

Tire mounted anti-skid apparatuses according to exemplary embodiments of the present invention will be described in detail below with reference to the accompanying drawings.

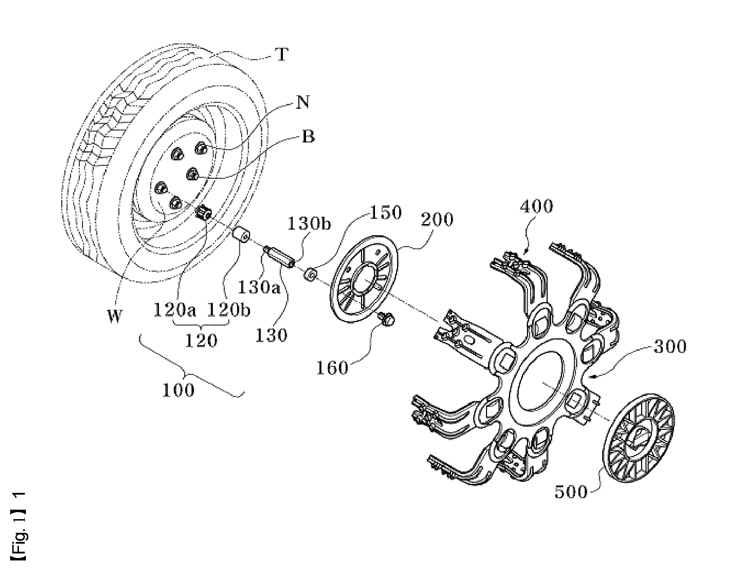

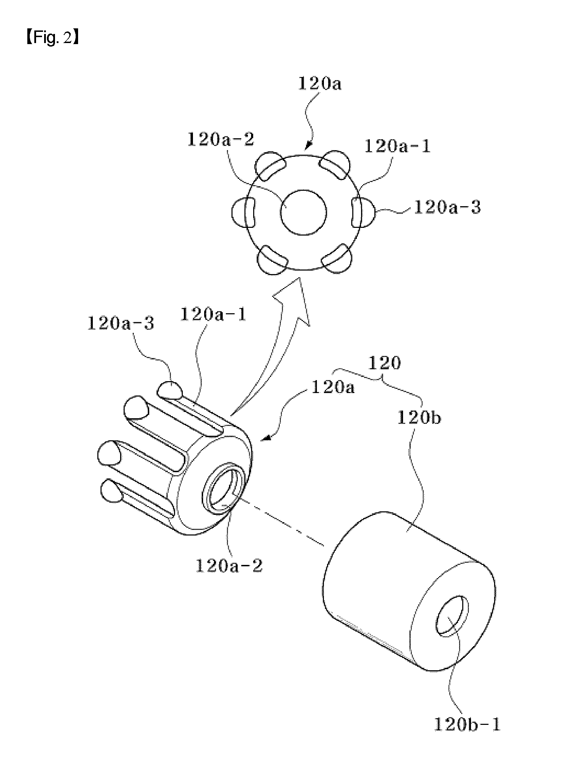

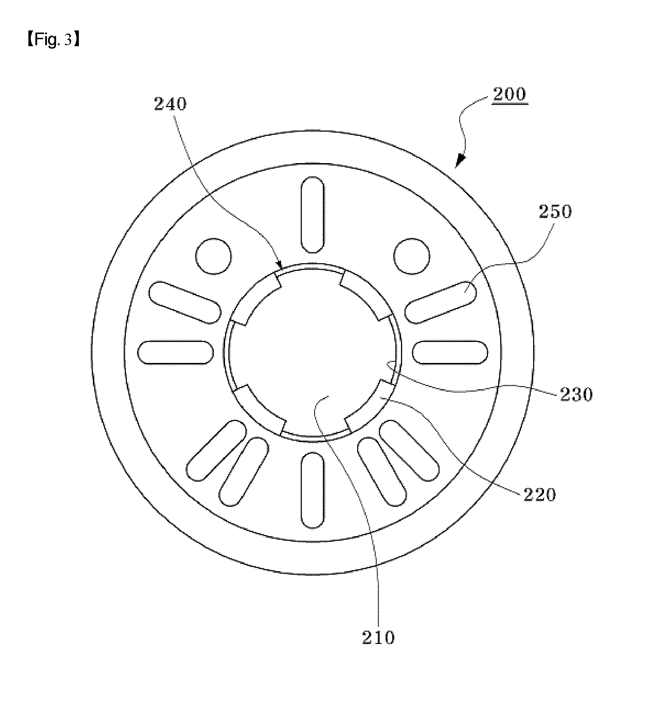

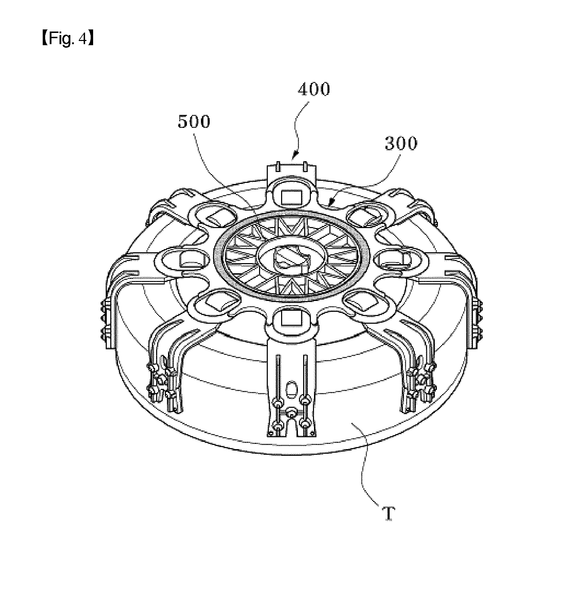

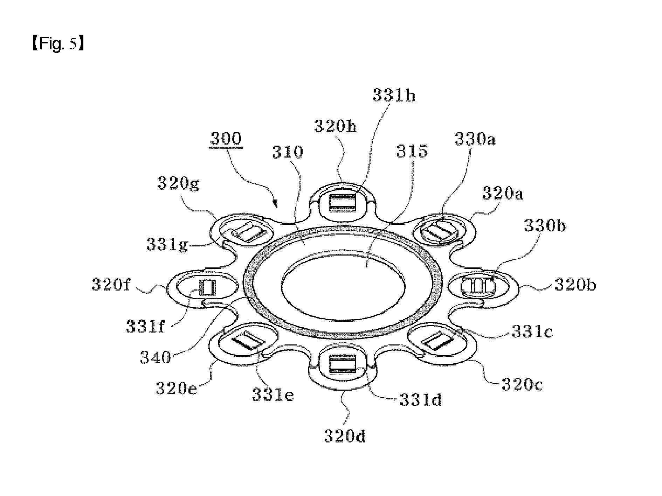

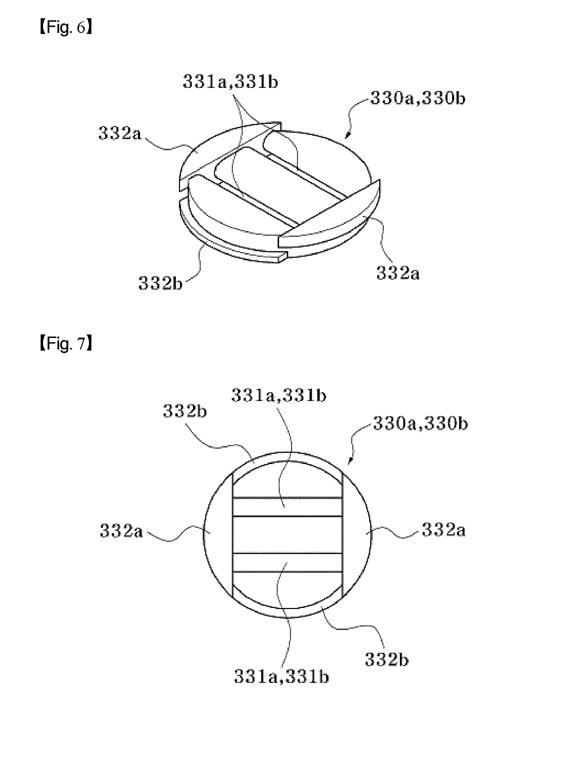

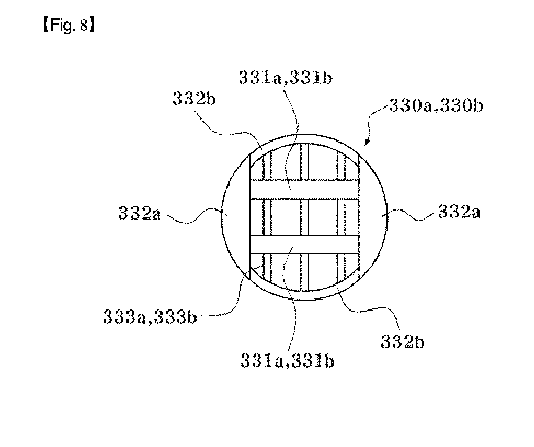

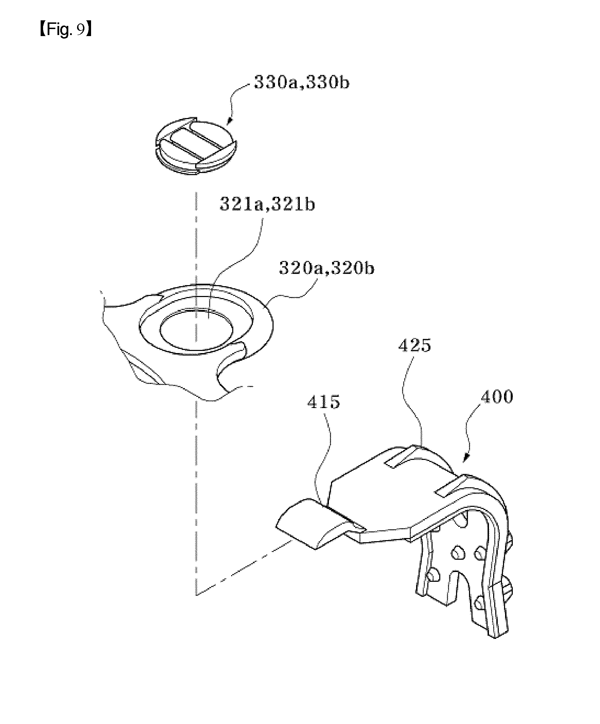

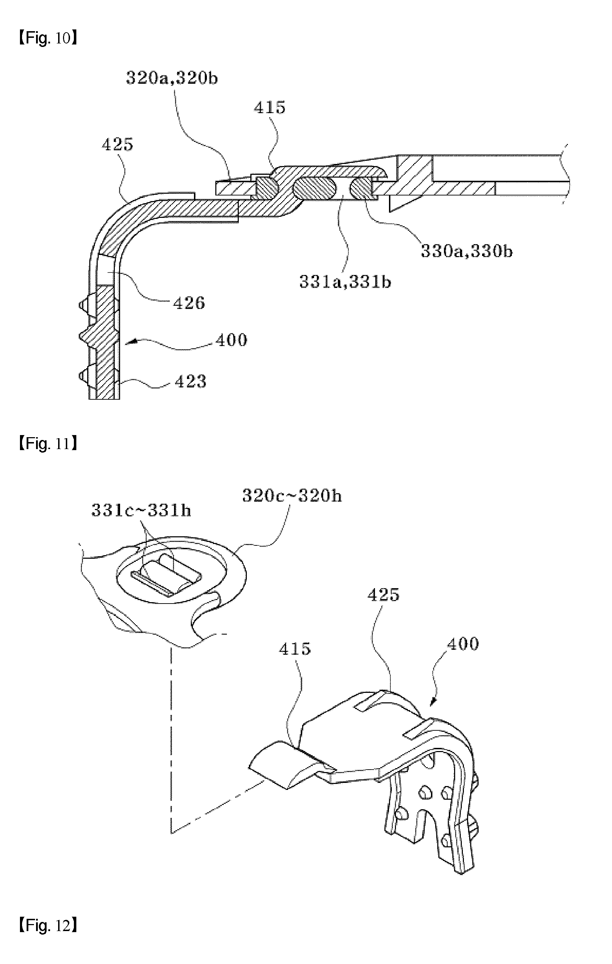

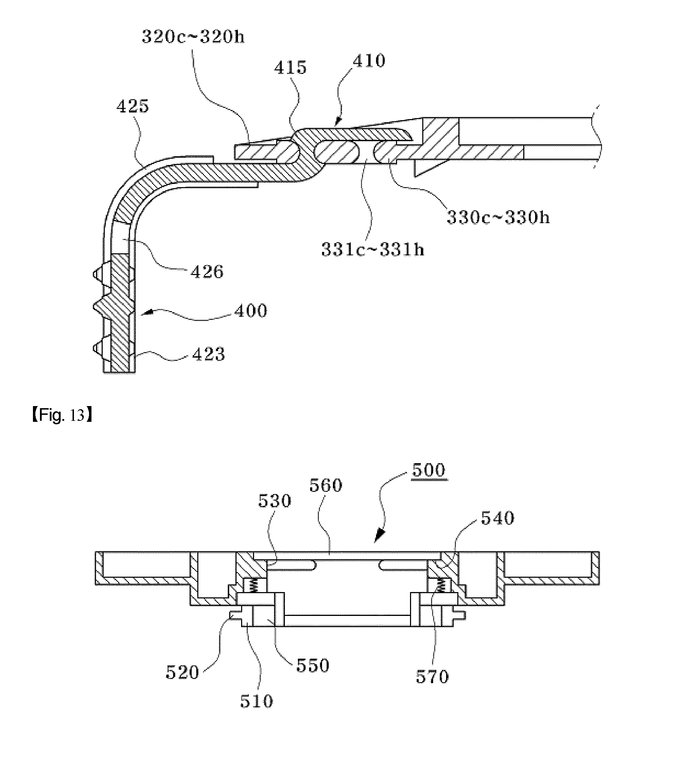

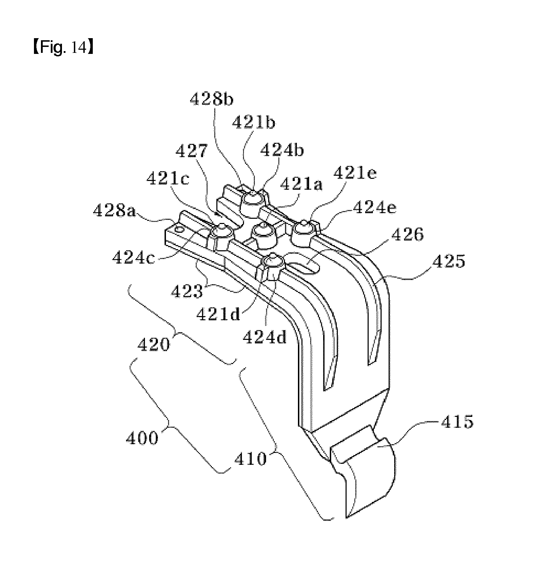

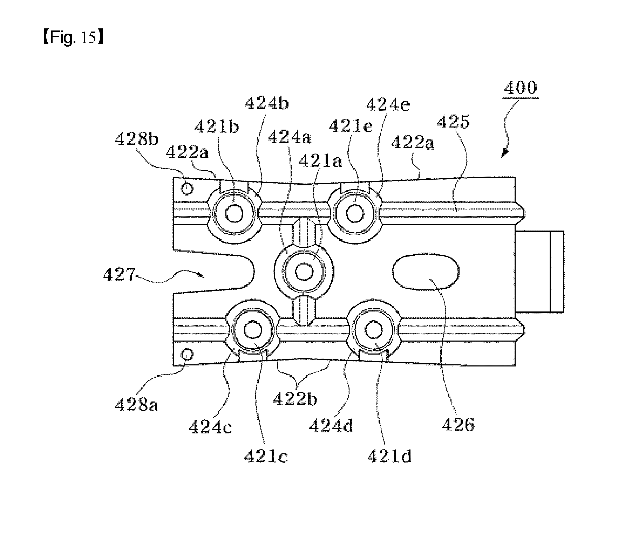

FIGS. 1 through 15 illustrate a tire mounted anti-skid apparatus according to a first exemplary embodiment ofthe present invention. FIG. 1 is a disassembled perspective view illustrating the state before a tire mounted anti-skid apparatus according to a first exemplary embodiment ofthe present invention is mounted on a tire. FIG. 2 is a disassembled perspective view illustrating a fix clip applied to a tire mounted anti-skid apparatus according to a first exemplary embodiment of the present invention. FIG. 3 illustrates a fixing plate applied to a tire mounted anti-skid apparatus according to a first exemplary embodiment of the present invention. FIG. 4 is an assembled perspective view illustrating the state after a tire mounted anti-skid apparatus according to a first exemplary embodiment of the present invention is mounted on a tire. FIG. 5 is a perspective view illustrating a support plate applied to a tire mounted anti-skid apparatus according to a first exemplary embodiment of the present invention. FIGS. 6 through 8 are a perspective view, atop-down view, and a bottom-up view illustrating a rotary disc applied to a tire mounted anti-skid apparatus according to a first exemplary embodiment of the present invention. FIG. 9 is a disassembled perspective view illustrating one example of a connector of an anti-skid arm applied to a tire mounted anti-skid apparatus according to a first exemplary embodiment of the present invention. FIG. 10 is an assembled cross-sectional view of FIG. 9. FIG. 11 is a disassembled perspective view illustrating another example of a connector of an anti-skid arm applied to a tire mounted anti-skid apparatus according to a first exemplary embodiment ofthe present invention. FIG. 12 is an assembled cross-sectional view of FIG. 11. FIG. 13 is a disassembled perspective view illustrating a locking plate applied to a tire mounted anti-skid apparatus according to a first exemplary embodiment of the present invention. FIG. 14 is a perspective view illustrating an anti-skid arm applied to a tire mounted anti-skid apparatus according to a first exemplary embodiment of the present invention. FIG. 15 is a top-down view illustrating an anti-skid arm applied to a tire mounted anti-skid apparatus according to a first exemplary embodiment of the present invention.

Referring to the figures, a tire mounted anti-skid apparatus according to a first exemplary embodiment of the present invention includes adaptors 100, a fixing plate 200, a support plate 300, anti-skid arms 400, and a locking plate 500. The tire mounted anti-skid apparatus is fastened to a tire wheel by attaching the fixing plate 200 to the tire wheel through the adaptors 100, fitting the support plate 300 coupled with the plurality of anti-skid arms 400 into the fixing plate 200, and laterally fixing the locking plate 500 to the support plate 300.

The adaptors 100 allow the fixing plate 200 to be installed to the same height as an outer sidewall of a tire T in consideration of a lateral height difference between the outer sidewall of the tire T and a wheel W. Each adaptor 100 includes a fix clip 120, a first bolt 130, and a second bolt 160.

The fix clip 120 includes a clip 120a and a cap 120b so as to be able to be sequentially put on a wheel nut N screwed on a wheel bolt.

The clip 120a is fitted around the wheel nut N on a side of the wheel W ofthe tire T, and includes six legs 120a-1 separated from one another, a nut hole 120a-2 having a threaded rear inner circumference thereof, and protrusions 120a-3, each of which is formed at a leading end of the leg 120a-1 in an outward direction. The six legs 120a-1 are tightly coupled with the wheel nut N in such a manner that they grip the wheel nut N.

The cap 120b covers the clip 120a to press the protrusions 120a-3 ofthe clip 120a, thereby more firmly coupling the legs 120a-1 and the wheel nut N. The cap 120b is provided with a nut hole 120b-1 having a threaded rear inner circumference thereof

The fix clip 120 is configured such that, when the clip 120a is covered and coupled around the wheel nut N, the nut hole 120a-2 of the clip 120a and the nut hole 120b-1 of the cap 120b communicate with each other and are kept adjacent to each other. A threaded part 130a located at a leading end ofthe first bolt 130 is allowed to be screwed into the communicating nut holes 120a-2 and 120b-1.

The first bolt 130 includes the threaded part 130a having the shape of a protruding shaft at a leading end thereof, and a nut hole 130b having a threaded inner circumference thereof in a trailing end thereof A length of the first bolt 130 is properly selected according to the mounted tire.

In the state in which the first bolts 130 are screwed, the fixing plate 200 is disposed. The second bolts 160 are screwed into the nut holes 130b ofthe first bolts 130 through fixing holes 250 of the fixing plate 200 on an outer side of the fixing plate 200, so that the fixing plate 200 is fixed. Here, a washer 150 made of a synthetic resin or a metal may be interposed between the fixing plate 200 and the first bolt 130.

In the tire mounted anti-skid apparatus according to a first exemplary embodiment of the present invention, the fixing plate 200 is fastened to the wheel W of the tire T through the adaptors 100. The fixing plate 200 includes a through hole 210 formed in a central portion thereof, hook steps 220 protruding outwards from an inner circumference of the through-hole 210 and arranged at regular intervals in a radial direction, hook parts 240 formed in insertion holes 230 between the hook steps 220, and a plurality of fixing holes 250 formed around the through-hole 210 so as to be fixed by the adaptors 100. A predetermined height difference exists between the hook step 220 and the hook part 240.

The fixing holes 250 ofthe fixing plate 200 enable the second bolts 160 to be screwed into the nut holes 130b formed at the trailing ends ofthe first bolts 130 ofthe adaptors 100. In other words, the second bolts 160 are screwed into the nut holes 130b of the first bolts 130 through the fixing holes 250, so that the fixing plate 200 is fixed.

The support plate 300 is fixed to the fixing plate 200 in close contact with the fixing plate 200. The support plate 300 includes a disc-like body 310 fixedly interposed between the fixing plate 200 and the locking plate 500 through an insertion hole 315 formed in the center thereof, and a plurality of connectors 320a to 320h radially arranging on an outer circumference ofthe body 310 at equal intervals and allowing the plurality of anti-skid arms 400 to be coupled and decoupled.

Among the connectors 320a to 320h, a pair of neighboring connectors 320a and 320b are provided with rotating holes 321a and 321b into which rotary discs 330a and 330b, which will be described below, are rotatably fitted.

The rotary disc 330a or 330b is provided with a fitting hole 331a or 331b into which an end ofthe anti-skid arm 400 can be fitted. Preferably, the rotary disc has a plurality of fitting holes formed at regular intervals.

Further, the rotary disc 330a or 330b has upper and lower hook steps 332a and 332b protruding from upper and lower outer circumferences thereof which located crisscross so as to be contacted with and hooked on lower and upper surfaces ofthe connector 320a or 320b in order to prevent escape from the rotating hole 321a or 321b.

Also, the rotary disc 330a or 330b preferably has a plurality of ribs 333a or 333b protruding from a lower surface thereof at regular intervals in order to reinforce entire strength ofthe rotary disc 330a or 330b in a direction perpendicular to a lengthwise direction ofthe fitting hole 331a or 331b.

Meanwhile, the remaining connectors 320c to 320h other than the pair of connectors 320a and 320b to which the rotary discs 330a and 330b are coupled are provided with fitting holes 331c to 331h into which the ends ofthe anti-skid arms 400 can be fitted, respectively. Preferably, each ofthe remaining rotary discs has a plurality of fitting holes formed at regular intervals.

In this manner, the fitting holes 331a and 331b are formed in the rotary disc 330a and 330b so as to allow the anti-skid arms 400 to move in a circumferential direction, so that the pair of connectors 320a and 320b make it easy to mount the anti-skid arms 400 at a contact portion between a tire and a road. Further, the fitting holes 331c and 331h are formed in the remaining connectors 320c to 320h without the rotary disc 330a and 330b so as to allow the remaining connectors 320c to 320h to be coupled with the anti-skid arms 400, so that the anti-skid arms 400 can be effectively prevented from being twisted on the tire T on a snowy or icy road.

Further, each ofthe remaining connectors 320c to 320h has the plurality of fitting holes 331c to 331h, so that each anti-skid arm 400 can be fitted into the inner or outer fitting hole so as to be suitable for a size of the tire T.

Meanwhile, an outer surface of the support plate, i.e. an outer surface between the body 310 and the connectors 320a to 320h, may have a doughnut or annular band 340. The annular band 340 may be coated with a fluorescent material, so that when driven at night, a vehicle can be easily recognized.

The ends ofthe anti-skid arms 400 are fixedly fitted into the connectors 320a to 320h, so that the anti-skid arms 400 come into close contact with a tread of the tire T, and thus function to prevent the tire T from sliding when the vehicle is driven through snow and ice.

Each anti-skid arm 400 includes a mount part 410 detachably fitted into each ofthe fitting holes 331a to 331h, and a contact part 420 extending from one end ofthe mount part 410 at a right angle and contacted with the road when mounted on the tire T.

The mount parts 410 come into close contact with the sidewall of the tire T, and are provided with coupling steps 415 at one ends thereof so as to be hooked in the fitting holes 331a to 331h when inserted into and becoming parallel to the fitting holes 331a to 331h.

The contact parts 420 come into close contact with the tread ofthe tire T. Each contact part 420 is provided with a plurality of spikes 421a to 421e on an outer surface thereof (i.e. on a contact surface with the road) in a zigzag pattern to increase friction against the snowy or icy road, and slopes 422a and 422b at opposite edges thereof which are inclined at a predetermined angle in order to increase a contact area with the road.

Further, each contact part 420 may further include a ridge 423 on a part or whole of the edge of an inner surface thereof (i.e. a contact surface with the tread of the tire T) in order to increase a binding force with the tire T. This ridge 423 preferably has a height of about 3 mm to about 10 mm, and a width of about 2 mm to about 5 mm.

The plurality of spikes 421a to 421e protrude through the contact part 420, and are composed of a first spike 421a mounted in the center ofthe contact part 420 and second to fifth spikes 421b to 421e mounted in diagonal directions centering the first spike 421a in a zigzag pattern. Inner and outer surfaces of the contact part 420 are each provided with first to fifth spike retainers 424a to 424e so as to partially surround circumferences of the first to fifth spikes 421a to 421e. The first to fifth spike retainers 424a to 424e have a hollow cylindrical shape. The first to fifth spikes 421a to 421e can be retained in the first to fifth spike retainers 424a to 424e.

The first to fifth spikes 421a to 421e are driven into the snow road on which snow is deposited or the frozen road, so that they further increase the friction against the road to effectively prevent the vehicle from sliding, and assist safe driving ofthe vehicle.

Further, the first to fifth spikes 421a to 421e are formed in a conical shape, and thus minimize a contact area with the road, so that they cause insignificant damage to the road, and thus can meet strict restriction of each country.

Further, since the first to fifth spikes 421a to 421e are disposed in a zigzag pattern rather than a linear pattern, so that they can increase a scratch area on the icy road to maximize a braking force.

In addition, to reinforce entire strength ofthe contact part 420 as well as further increase friction against the snowy or icy road, the contact part 420 is provided with a reinforcement rib 425, which connects the retainers 424a to 424e of the first to fifth spikes 421a to 421e and protrudes from the outer surface of the contact part 420. Such a reinforcement rib may be formed on the inner surface of the contact part 420 in the same way.

Further, to further increase a road contact pressure against the road on which snow is deposited, the contact part 420 may further include a through-hole 426 on one side thereof which has a predetermined size, and a U-shaped recess 427 in a terminal end thereof.

Further, the contact part 420 may be provided with chain holes 428a and 428b at opposite corners of the terminal end thereof The anti-skid arms 400 are connected with chains (not shown) using these chain holes 428a and 428b, so that it is possible to further increase a binding force with the tire T.

The locking plate 500 is fitted into the fixing plate 200. The locking plate 500 is configured to be coupled with the fixing plate 200 intermittently supported by elasticity of a locking means when the locking plate 500 is turned under pressure in the state where the body 310 of the support plate 300 is interposed between the fixing plate 200 and the locking plate 500, thereby to fix the support plate 300

This locking plate 500 includes a circular protrusion 510 inserted into the through-hole 210, fixing steps 520 formed on an outer circumference of the circular protrusion 510 so as to be engaged with the hook steps 220 when inserted into and turned in the insertion holes 230 of the fixing plate 200, and means for restricting the engagement of the hook steps 220 and the fixing steps 520 from being released.

The restricting means includes an installation hole 530 formed in the center of the circular protrusion 510, a restrictor 560 having restriction protrusions 550 so as to restrict the hook steps 220 to prevent rotation of the locking plate 500 when the locking plate 500 is engaged with the fixing plate 200 in the state where it is slidably fitted into the installation hole 530 and is hooked on a downward hook step 540 formed on an upper end ofthe installation hole 530, and a spring 570 disposed between the restrictor 560 and the installation hole 530 such that the restrictor 560 is always biased in an upward direction.

In detail, to couple the locking plate 500 to the fixing plate 200, when the locking plate 500 is pressed in the state where the fixing steps 520 are inserted into the insertion holes 230, the locking plate 500 is allowed to be turned. In this state, when locking plate 500 is turned, the fixing steps 520 are engaged with the hook steps 220. When the restriction protrusions 550 reach the insertion holes 230, they spring out by elasticity of the spring 570, so that the locking plate 500 is fixed so as not to be turned.

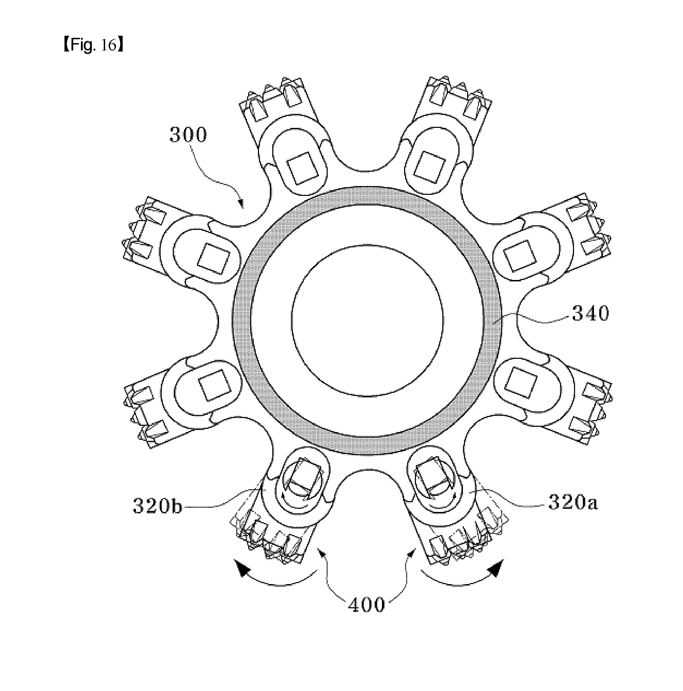

FIG. 16 is a view for explaining how a tire mounted anti-skid apparatus according to a first exemplary embodiment of the present invention is mounted on a tire.

Referring to FIGS. 1 through 16, a vehicle is driven in the state where a fixing cover (not shown) is coupled on the outer side ofthe fixing plate 200 mounted on the wheel W ofthe tire T at normal times. When the vehicle is to be driven on a snowy or icy road, the fixing cover is separated from the fixing plate 200, and then the support plate 300, on which the plurality of anti-skid arms 400 are mounted at equal intervals, is closely coupled to the fixing plate 200.

At this time, among the plurality of anti-skid arms 400, two anti-skid arms 400 coupled to the rotary discs 330a and 330b are posited so as to be contacted with the road, are widened in opposite directions, and comes into close contact with the tire T.

Next, the locking plate 500 is fitted outside the support plate 300, and is turned in a clockwise or counterclockwise direction until it is coupled to the fixing plate 200. Thereby, the mounting work is completed in a simple, rapid manner.

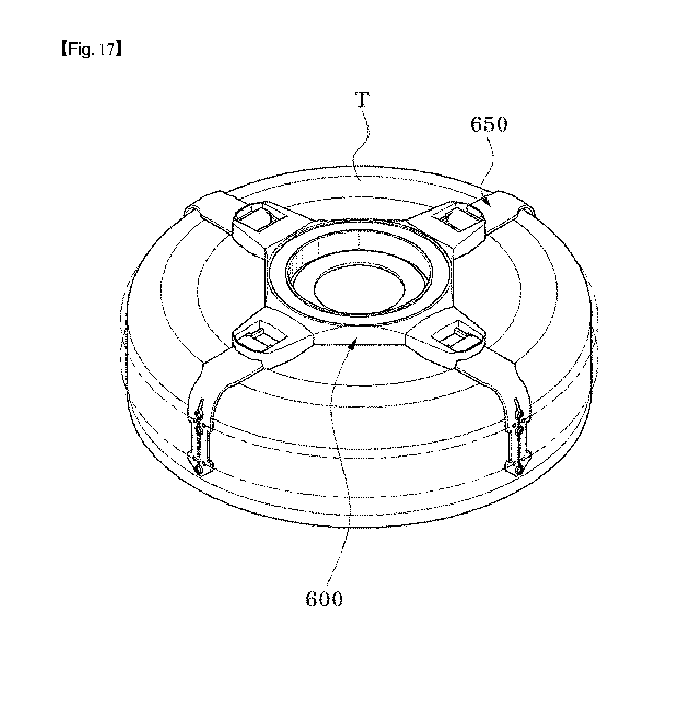

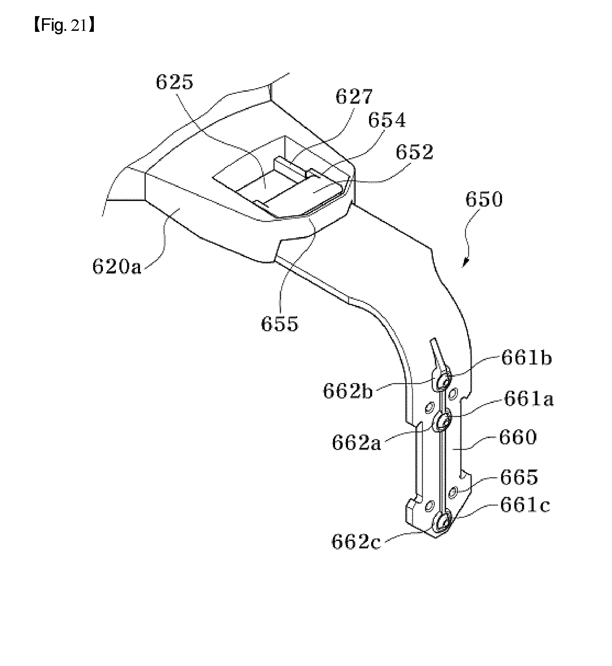

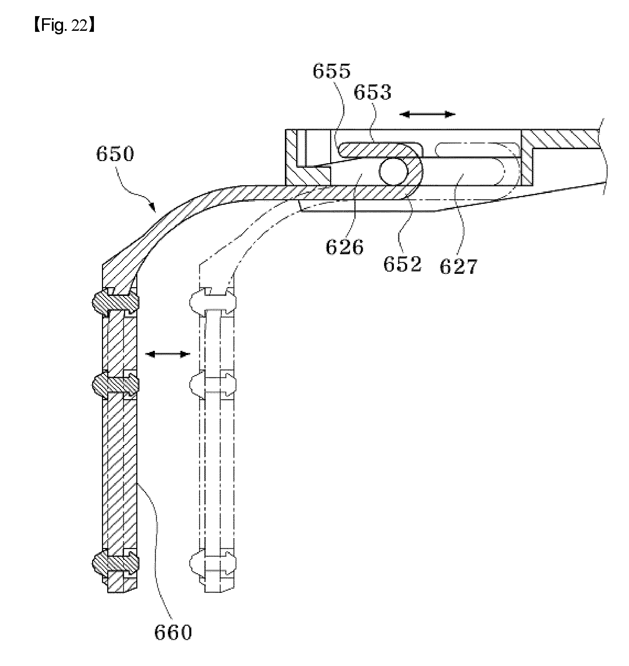

Hereinafter, a second exemplary embodiment ofthe present invention will be described with reference to FIGS. 17 through 24. In comparison with the first exemplary embodiment ofthe present invention, the identical or similar parts will not be described.

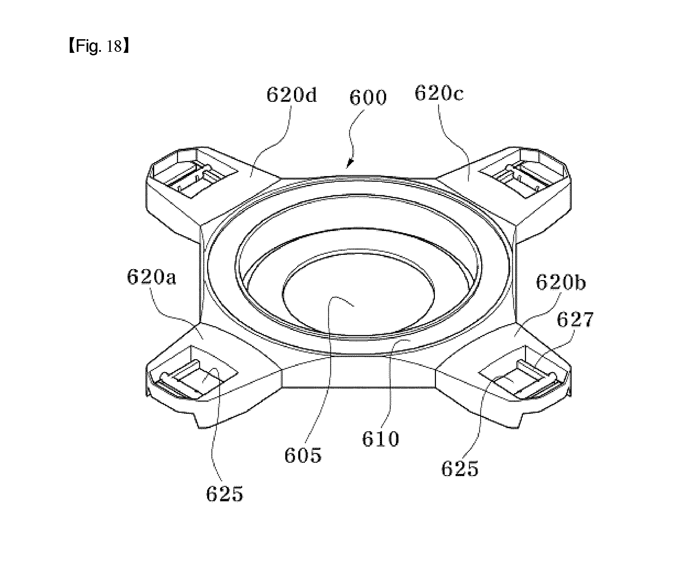

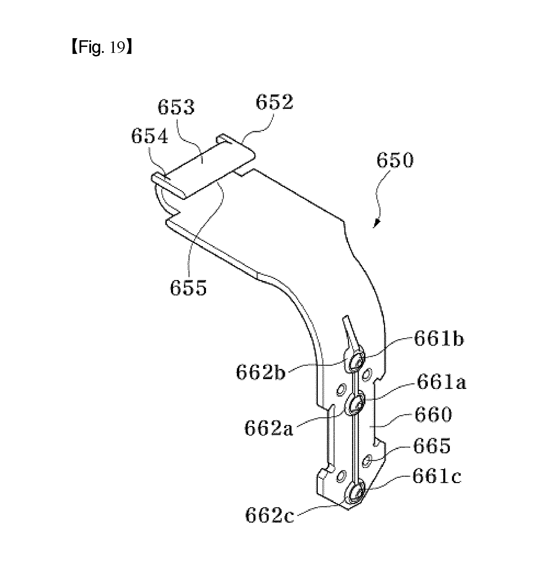

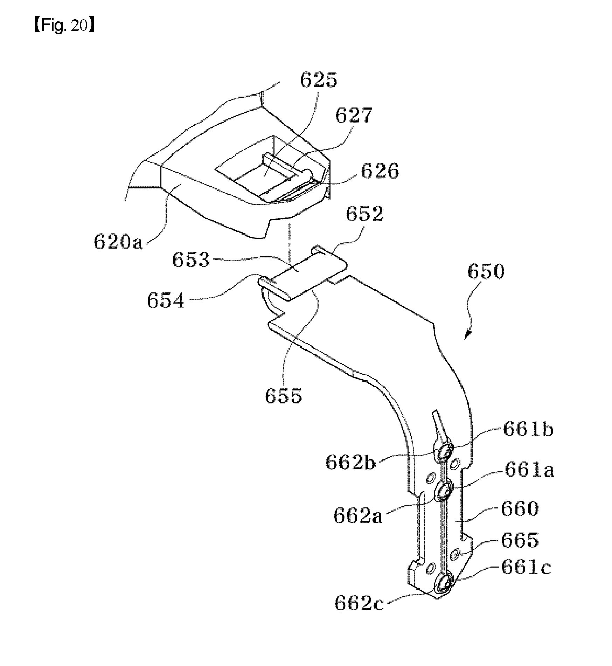

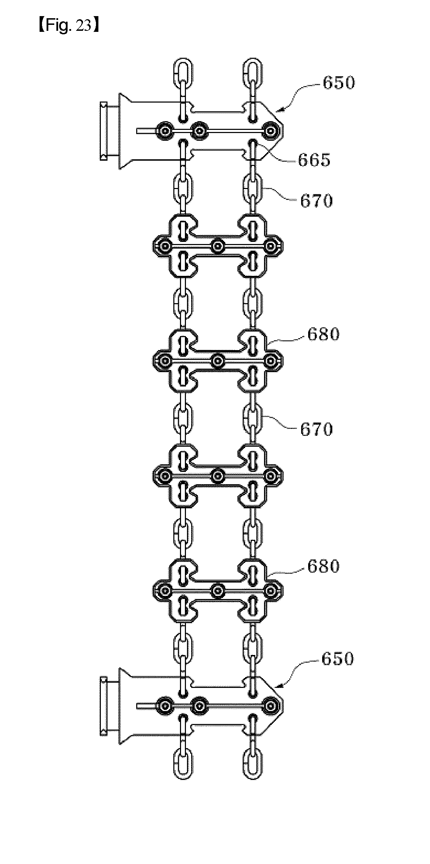

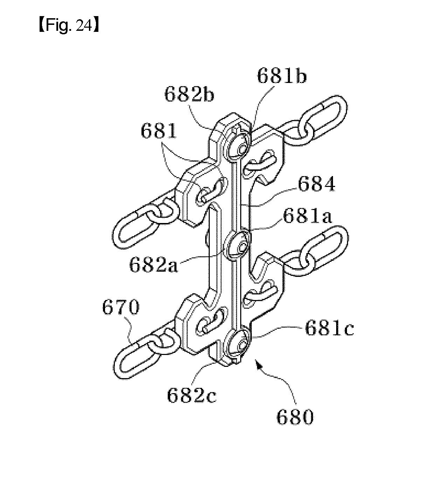

FIG. 17 is a perspective view of a tire mounted anti-skid apparatus according to a second exemplary embodiment of the present invention, FIG. 18 is a perspective view of a support plate applied to the tire mounted anti-skid apparatus according to a second exemplary embodiment of the present invention, FIG. 19 is a perspective view of an anti-skid arm applied to the tire mounted anti-skid apparatus according to a second exemplary embodiment ofthe present invention, FIGS. 20 to 22 are views illustrating coupling between a support plate and an anti-skid arm applied to the tire mounted anti-skid apparatus according to a second exemplary embodiment of the present invention, FIG. 23 is a view illustrating coupling between an anti-skid arm and a spike mounting plate applied to the tire mounted anti-skid apparatus according to a second exemplary embodiment of the present invention, and FIG. 24 is a perspective view of the spike mounting plate applied to the tire mounted anti-skid apparatus according to a second exemplary embodiment ofthe present invention.

Referring to the figures, the tire mounted anti-skid apparatus according to a second exemplary embodiment ofthe present invention includes a support plate 600, anti-skid arms 650, and spike mounting plates 680.

The support plate 600 is adhered to a fixing plate and fixed by a locking plate, like the embodiment described above. The support plate 600 includes a disc-shaped body 610 having an insertion hole 605 formed in the center thereof, and a plurality of connectors 620a to 620d equidistantly disposed on a circumference of the body 610 to detachably couple the anti-skid arms 650.

The connectors 620ato 620d have fitting holes 625 into which mount parts 652 ofthe anti-skid arms 650 are fitted. The fitting holes 625 have a predetermined width in a radial direction such that the mount parts 652 of the anti-skid arms 650 can move in a radial direction. In addition, guides 627 protrude outwards from both sides ofthe fitting holes 625. The mount parts 652 ofthe anti-skid arms 650 are supported by the guides 627 at their both upper side surfaces in the state in which the mount parts 652 are inserted into the fitting holes 625, preventing separation and allowing slide along the guides 627.

The fitting holes 625 have a predetermined width to allow smooth insertion of the mount parts 652 of the anti-skid arms 650. Since the tire mounted anti-skid arms 650 move in a radial direction in a state adhered to the surface of a tire T when the tire T is contracted in a road surface contact direction due to weight of the vehicle, the anti-skid arms 650 can contact the road surface in a state adhered to the surface ofthe tire T even contraction of the tire T, and the weight applied to the anti-skid arms 650 can be distributed through slide movement.

Through-holes 626 are formed at radial outsides ofthe fitting holes 625 so that ends 655 of the mount parts 652 can be inserted into the fitting holes 625 in a state fitted into the mount parts 652 of the anti-skid arms 650. After radial movement to the outermost in the state in which the anti-skid arms 650 are inserted into the fitting holes 625 by the through-holes 626, the anti-skid arms 650 can rotate as the ends 655 of the mount parts 652 are inserted into the through-holes 626, so that the anti-skid arms 650 can be folded with respect to the support plate 600 during storage.

Each anti-skid arm 650 includes the mount part 652 detachably coupled to the fitting holes 625, and a contact part 660 perpendicularly extending from one end ofthe mount part 652 and mounted on the tire T to contact the road surface.

The mount part 652 is bent upwards on its end side to form a U-shaped cross-section. An upper surface 653 of the mount part 625 has a width larger than that of the fitting holes 625 so that both upper side surfaces 654 are hooked by the guides 627 projecting from both sides ofthe fitting holes 625 to prevent separation thereof.

The contact part 660 has a plurality of spikes 661a to 661c adhered to a circumference of the tire T and increasing friction ofthe circumference on a snowy or icy road. The spikes 661a to 661c include a first spike 661a mounted at a center of the contact part 660, a second spike 661b mounted inside the first spike 661a, and a third spike 661c mounted outside the first spike 661a and adjacent to an end ofthe contact part 660.

First to third spike retainers 662a to 662c are formed on inner and outer surfaces of the contact part 660 to partially surround the first to third spikes 661a to 661c, respectively. The spike retainers 662a to 662c have a hollow cylindrical shape through which the spikes 661a to 661c are inserted and retained.

The first to third spikes 661a to 661c dig into the snowy or icy roads to further increase friction with the road surface, effectively preventing skid ofthe vehicle and enabling safe driving ofthe vehicle. The spike retainers 662a to 662c surrounding the spikes allow the spikes 661 to 661c to be firmly coupled to the contact part 660 ofthe anti-skid arm 650, while reducing the thickness ofthe contact part 660.

In addition, in order to reinforce the entire strength of the contact part 660 and further increase friction against the snowy or icy road, a reinforcement rib 664 connecting the spike retainers 662a to 662c surrounding the first to third spikes 661a to 661c and protruding from an outer surface of the contact part 660 is further formed. Here, another reinforcement rib corresponding to the reinforcement rib 664 may also be formed at an inner surface of the contact part 660 to increase the strength of the contact part 660.

Further, the contact part 660 has a plurality of chain holes 665 into which one ends of chains 670 are inserted. The chain holes 665 are formed at both side surfaces of the contact part 660 to correspond to the number of chains in a longitudinal direction. In the tire mounted anti-skid apparatus in accordance with an exemplary embodiment of the present invention, the contact part 660 has four chain holes 665 formed in both side surfaces thereof spaced apart in a longitudinal direction. Since the contact part 660 extends in a direction crossing the circumference ofthe tire, the longitudinal direction is a direction crossing the circumference ofthe tire.

The tire mounted anti-skid apparatus according to a second exemplary embodiment ofthe present invention includes a plurality of spike mounting plates 680 disposed between the anti-skid arms 650 and connected by chains.

Each ofthe spike mounting plates 680 includes a plurality of spikes 681a to 681c adhered to the circumference ofthe tire T to increase friction of the outer surface (contacting the road surface) on a snowy or icy road. The spikes 681a to 681c include a first spike 681a mounted on a center ofthe spike mounting plate 680, and second and third spikes 681b and 681c mounted inside and outside the first spike 681a.

First to third spike retainers 682a to 682c are formed at inner and outer surfaces of the mounting plate 680 to surround the first to third spikes 681a to 681c, respectively. The spike retainers 682a to 682c have a hollow cylindrical shape, through which the spikes 681a to 681c are inserted and retained. In addition, in order to reinforce the entire strength of the spike mounting plate 680 and further increase friction against a snowy or icy road, a reinforcement rib 684 further projects from the outer surface of the spike mounting plate 680 to connect the spike retainers 682ato 682c surrounding the first to third spikes 681ato 681c. Another reinforcement rib corresponding to the reinforcement rib 684 may also be formed at the inner surface of the spike mounting plate 680 to increase the strength ofthe spike mounting plate 680.

A plurality of chain holes 681 are formed upper and lower both side surfaces ofthe spike mounting plate 680. The chain holes 681 are formed in a longitudinal direction ofthe spike mounting plate 680 to correspond to the chain holes ofthe anti-skid arms. Upper and lower chain holes 681 are formed in a direction perpendicular to the longitudinal direction. Therefore, ends of the chains may be selectively coupled to the chain holes 681 relatively adjacent to or far from a centerline ofthe spike mounting plate 680. In other words, when the chain 670 is connected to the chain hole 681 adjacent to the centerline, a mount distance of the chain is shortened, and when the chain 670 is connected to the chain hole 681 far from the centerline, the mount distance of the chain is lengthened. As a result, it is possible to adjust the mount distance ofthe chain 670 according to the size of the tire T.

Referring to FIG. 23, in the tire mounted anti-skid apparatus according to a second exemplary embodiment ofthe present invention, four spike mounting plates 680 are installed between the anti-skid arms 640. The chains 670 connect the anti-skid arms 650 to the spike mounting plates 680, and connect the spike mounting plates 680 to each other. Both ends ofthe chains 670 are coupled to the chain holes 665 ofthe anti-skid arms 650 and the chain holes 681 of the spike mounting plates 680 to connect the anti-skid arms 650 to the spike mounting plates 680.

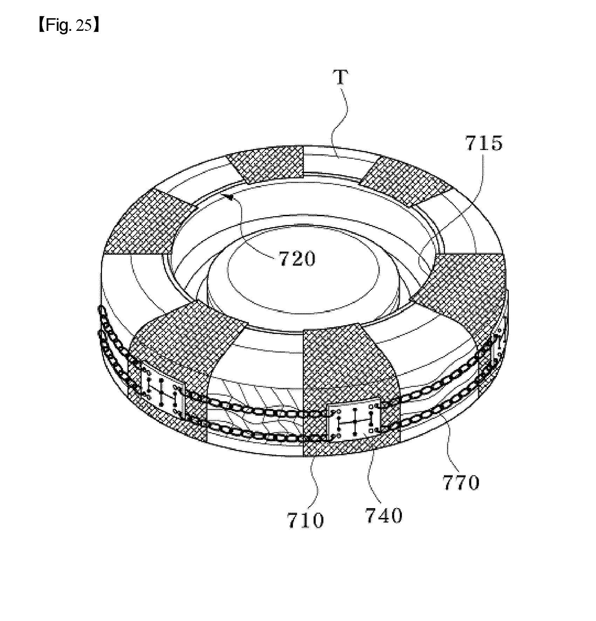

Hereinafter, a third exemplary embodiment of the present invention will be described with reference to FIGS. 25 through 31.

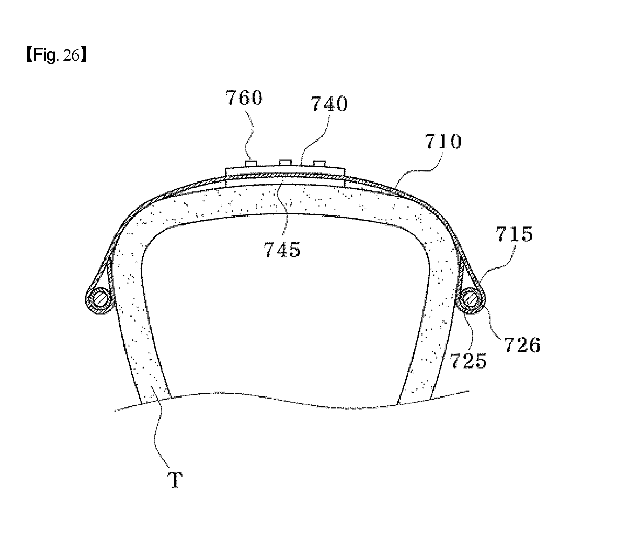

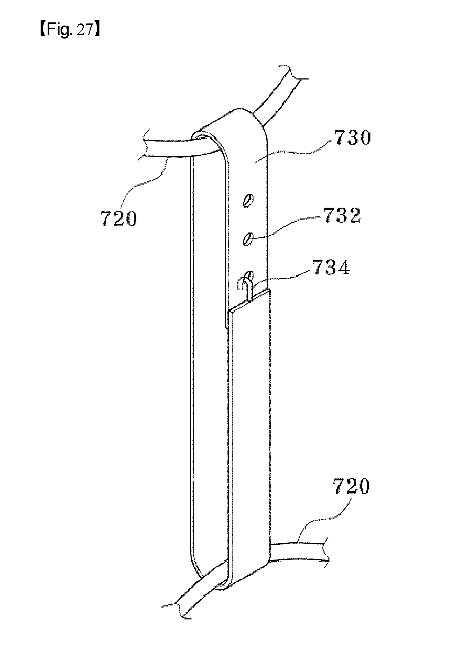

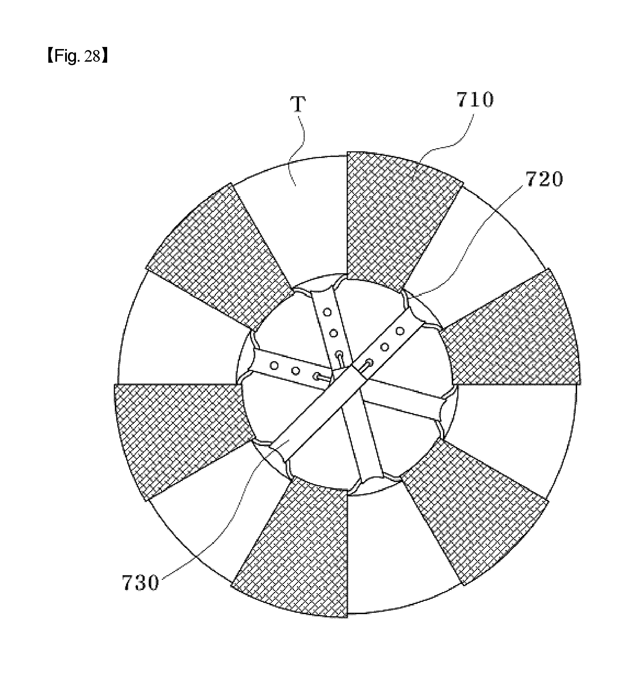

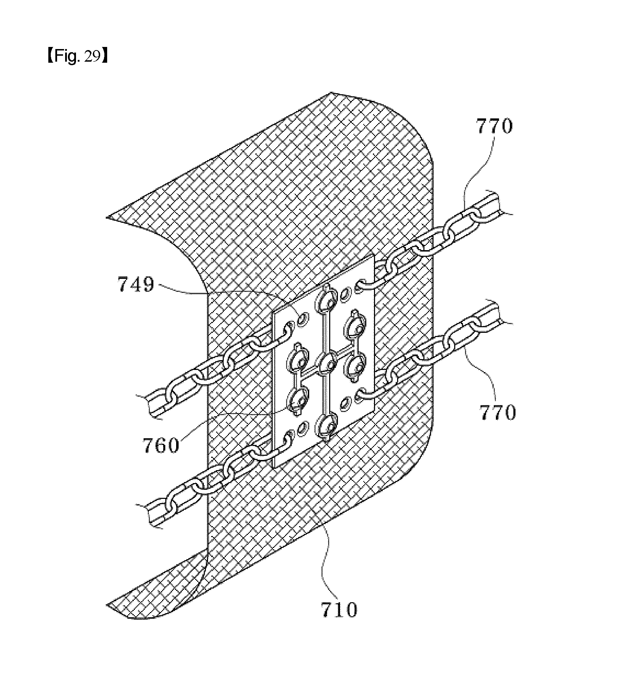

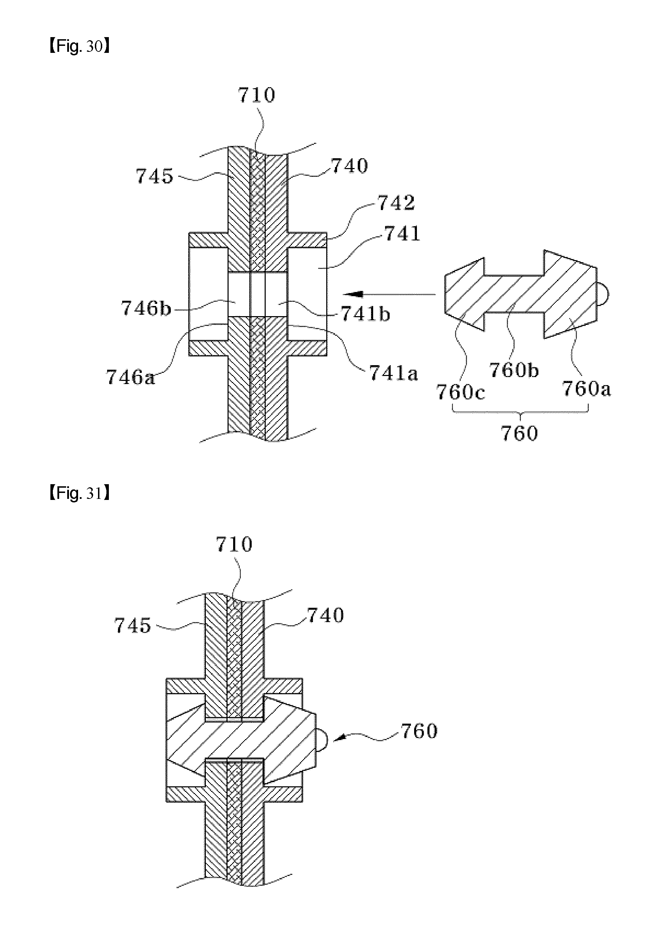

FIG. 25 is a perspective view illustrating the state in which a tire mounted anti-skid apparatus according to a third exemplary embodiment ofthe present invention is mounted on a tire. FIG. 26 is a partial cross-sectional view illustrating the state in which a tire mounted anti-skid apparatus according to a third exemplary embodiment of the present invention is mounted on a tire. FIG. 27 illustrates a tightening belt in a tire mounted anti-skid apparatus according to a third exemplary embodiment of the present invention. FIG. 28 illustrates the state after tightening belts are coupled in a tire mounted anti-skid apparatus according to a third exemplary embodiment of the present invention. FIG. 29 illustrates a plastic pad in a tire mounted anti-skid apparatus according to a third exemplary embodiment ofthe present invention. FIG. 30 is a cross-sectional view illustrating the state before a plastic pad is coupled in a tire mounted anti-skid apparatus according to a third exemplary embodiment ofthe present invention. FIG. 31 is a cross-sectional view illustrating the state after a plastic pad is coupled in a tire mounted anti-skid apparatus according to a third exemplary embodiment of the present invention.

A tire mounted anti-skid apparatus according to a third exemplary embodiment of the present invention includes a plurality oftextile arms 710 partially surrounding the outer circumference of a tire T, plastic pads 740 fixed to the textile arms 710, and chains 770 connected between the plastic pads 740.

Each textile arm 710 has the shape of a belt, extends in a direction perpendicular to a circumferential direction of the tire T, and thus surrounds the outer surface of the tire T. Each textile arm 710 is made of fabric, and may be coated to reinforce and stabilize the fabric, and particularly to increase friction between its outer surface and a road.

Each textile arm 710 includes pocket parts 715 at opposite ends thereof in which elastic members 725 are inserted. The pocket parts 715 extend through the ends of each textile arm 710, thereby forming circular pocket parts 720 on the whole.

Thus, the textile arms 710 have the circular pocket parts 720 on the opposite sides thereof, and thus the belt-shaped textile arms 710 are configured to be connected between the circular pocket parts 720. Each elastic member 725 includes a core made of silicon rubber, and a textile sheath 726 surrounding the core. Each elastic member 725 can constantly control its elongation by surrounding its outer circumference ofthe core made of silicon rubber with the textile part 726 made of a material having a restricted elongation or a non-elastic material. It is more advantageous that the elastic member 725 has such an elongation as to be required to mount the textile arm 710 on the tire T outside the tire T.

The tire mounted anti-skid apparatus according to a third exemplary embodiment of the present invention includes tightening belts 730 tightening the circular pocket parts 725.

Each tightening belt 730 has the shape of a flat belt, and includes a plurality of fixing holes 732 in a lengthwise direction in one end thereof and a hook 734 inserted into one of the fixing holes 732 at the other end thereof Each tightening belt 730 is looped over the circular pocket parts 720 between the textile arms 710, and then the hook 734 is inserted into one ofthe fixing holes 732, so that the tightening belt 730 is fixed. Thereby, the circular pocket parts 720 are pulled and tightened, thereby restricting elongation of the elastic members 725 inserted in the circular pocket parts 720. As a result, the textile arms 710 can be fixed in closer contact with the outer circumference of the tire T.

According to a third exemplary embodiment of the present invention, the plastic pads 740, each of which has spikes 760, are installed on outer surfaces ofthe respective textile arms 710. Coupling plates 745 made ofplastic are installed on inner surfaces ofthe respective textile arms 710, and are coupled with the plastic pads 740, so that the textile arm 710 is interposed between the plastic pad 740 and the coupling plate 745. The plastic pad 740 and the coupling plate 745 are closely fixed by the spikes 760 with the textile arm 710 interposed therebetween.

Each plastic pad 740 is provided with spike holes 741 for mounting the spikes, and spike retainers 742 surrounding the spikes around the spike holes 741. Similarly, each coupling plate 745 is provided with spike holes 746 corresponding to the spike holes 741 of each plastic pad 740, and spike retainers 747. Steps 741a and 746a are formed in the spike holes 741 and 746, respectively. Holes 741b and 746b are formed in the center ofthe steps 741a and 746a such that shafts 760b ofthe spikes 760 are fitted therein.

Thus, in the state where the plastic pad 740 and the coupling plate 745 are in close contact with each other with the textile arm 710 interposed therebetween, when the spike 760 is inserted under pressure in front of the plastic pad 740, a rear conical part 760c of the spike 760 elastically deforms the steps 741a and 746a, and passes through the holes 741b and 746b, so that the shaft 760b of the spike 760 is located in the holes 741b and 746b. Thus, the opposite conical parts 760a and 760c ofthe spike 760 are hooked on the steps 741a and 746a, and thus the plastic pad 740, the coupling plate 745, and the spike 760 are fixed to one another. A front conical part 760a of the spike 760 is driven into the snowy or icy road, thereby further increasing friction against the road, and effectively preventing the vehicle from sliding.

In the tire mounted anti-skid apparatus according to a third exemplary embodiment ofthe present invention, each plastic pad 740 has a plurality of spikes 760. The plurality of spikes 760 are composed of a first spike 760a mounted in the center ofthe plastic pad 740, and second to seventh spikes 760b to 760g disposed around the first spike 760a. The plastic pad 740 is provided with a reinforcement rib 748 on an outer surface thereof which connects the spike retainers 742 of the spikes 760a to 760g and protrudes from the outer surface ofthe plastic pad 740. The reinforcement rib 748 reinforces entire strength ofthe plastic pad 740 and increases friction against the snowy or icy road.

In the present invention, the spikes may be variously disposed without a limitation to exemplary embodiments. For example, as in the first exemplary embodiment ofthe present invention, the spikes may be disposed in such a manner that the first spike is mounted in the center of the plastic pad and the second to fifth spikes are mounted in diagonal directions centering the first spike in a zigzag pattern. As in the second exemplary embodiment of the present invention, the spikes may be disposed in such a manner that the three spikes are mounted in a row.

According to a third exemplary embodiment of the present invention, the plastic pads 740 of the textile arms 710 are connected to one another by chains 770. Each plastic pad 740 is provided with chain holes 749 on opposite sides thereof in which ends of the chins are inserted. The number of chain holes 749 formed on each side ofthe plastic pad is determined by the number of chains. Here, at least two chain holes 749 are formed spaced apart from each other on each side of the plastic pad.

According to a third exemplary embodiment of the present invention, a plurality of chain holes 749 are formed in the plastic pad 740 in a direction perpendicular to a centerline ofthe plastic pad 740 intersecting with the circumferential direction ofthe tire. Thus, the ends ofthe chains 770 are selectively coupled in the chain holes 749 adjacent to the centerline of the plastic pad 740 or in the chain holes 749 remote from the centerline ofthe plastic pad 740. Thus, it is possible to adjust an entire length ofthe mounted chains 770. The chains are connected to the desired chain holes 749 so as to be suitable for the size of the tire T.

Further, as in the second exemplary embodiment ofthe present invention, spike mounting plates on which a plurality of spikes are mounted may be installed between the textile arms.

Since the tire mounted anti-skid apparatus according to a third exemplary embodiment of the present invention can be mounted on the tire in such a manner that the textile arms cover the tire without using the adaptors or the fixing plate described in the first exemplary embodiment, the convenience of use is remarkably improved due to easy installation.

## Claims

1. A tire mounted anti-skid apparatus comprising;
a fixing plate attached to a tire wheel through adaptors; and
a support plate having a plurality of anti-skid arms is fitted to the fixing plate and fixed on a side of the tire by a locking plate,
wherein each adaptor comprises: a fix clip having a clip and a cap, the clip being fitted around a wheel nut of a wheel of the tire and including six legs separated from one another, a nut hole in a rear thereof, and protrusions, each of which protrudes from a leading end of the leg in an outward direction, and the cap covering the clip, causing an inner circumference thereof to press the protrusions ofthe clip, and comprising a cylindrical cap having a nut hole communicating with the nut hole of the clip in a rear thereof; a first bolt including a threaded part having a shape of a protruding shaft at a leading end thereof and screwed into the communicating nut holes of the clip and the cap, and a nut hole in a trailing end thereof; and a second bolt screwed to the nut hole of the trailing end of the first bolt through a fixing hole formed in the fixing plate disposed on the first bolt so as to fix the fixing plate;
the support plate includes: a disc-shaped body that has an insertion hole formed in the center thereof, is fitted through the insertion hole, and is fixed between the fixing plate and the locking plate; and a plurality of connectors radially disposed on a circumference of the body;
each anti-skid arm comprises: a mount part that is detachably fitted into each connector, and a contact part that is bent from one end of the mount part and has a plurality of spikes contacted with the road when mounted on the tire to increase friction against a snowy or icy rod;
the fixing plate comprises: a through-hole formed in a central portion thereof such that the wheel of the tire is located; hook steps protruding outwards from an inner circumference ofthe through-hole and arranged at regular intervals in a radial direction; hook parts formed in insertion holes between the hook steps; and a plurality of fixing holes formed around the through-hole; and
the locking plate comprises: a circular protrusion inserted into the through-hole of the fixing plate; fixing steps formed on an outer circumference ofthe circular protrusion so as to be engaged with the hook steps when inserted into and turned in the insertion holes ofthe fixing plate; and means for restricting the engagement ofthe hook steps and the fixing steps from being released, the restricting means including an installation hole formed in the center of the circular protrusion, a restrictor slidably fitted into the installation hole and having restriction protrusions so as to restrict the hook steps to prevent rotation ofthe locking plate when the locking plate is engaged with the fixing plate, and a spring disposed between the restrictor and the installation hole such that the restrictor is biased in an upward direction.

2. The tire mounted anti-skid apparatus as claimed in claim 1, wherein:
among the connectors, a pair of neighboring connectors include rotating holes into which rotary discs having a plurality of fitting holes formed at regular intervals are rotatably fitted; and the remaining connectors include a plurality of fitting holes formed at regular intervals; and
the mount part of each anti-skid arm is inserted into the fitting hole, and includes a coupling step at one end thereof so as to be hooked in the fitting hole when inserted into the fitting hole.

3. The tire mounted anti-skid apparatus as claimed in claim 1, wherein the contact part further includes a ridge protruding from an edge of an inner surface thereof in order to increase a binding force with the tire.

4. The tire mounted anti-skid apparatus as claimed in claim 1, wherein the contact part includes spike retainers so as to surround circumferences ofthe spikes, and a reinforcement rib that connects the spike retainers and protrudes from an outer surface thereof.

5. The tire mounted anti-skid apparatus as claimed in claim 1, wherein:
the plurality of connectors include fitting holes having a predetermined width in a radial direction, and guides protruding outwards from both sides ofthe fitting holes; and
the mount parts of the anti-skid arms are inserted into the fitting holes, are bent upwards to form a U-shaped cross-section, are formed such that upper surfaces thereof have a width larger than that of the fitting holes, are prevented from being separated by causing both upper side surfaces thereof to be hooked on the guides after being inserted into the fitting holes, and are allowed to slide in a radial direction after being inserted into the fitting holes.

6. The tire mounted anti-skid apparatus as claimed in claim 5,
wherein the contact part of each anti-skid arm includes a plurality of chain holes formed on both sides thereof in a lengthwise direction, and
further includes a plurality of spike mounting plates, which are disposed between the anti-skid arms, and each of which includes a plurality of spikes to increase friction against a snowy or icy road and chain holes corresponding to the chain holes of each anti-skid arm and formed on both sides thereof in a lengthwise direction,
wherein the anti-skid arms and the spike mounting plates are connected by chains, opposite ends of each of which are inserted into the chain holes of the contact parts and the spike mounting plates, and
wherein each spike mounting plate has a plurality of chain holes, which are formed in a direction perpendicular to a lengthwise direction thereof, and to which the ends of the chains are selectively coupled so as to adjust a mounting length ofthe chains.

7. A tire mounted anti-skid apparatus comprising:
a plurality of textile arms extending in a direction crossing a circumferential direction of a tire, and partially surrounding an outer surface ofthe tire;
circular pocket parts having pocket parts which are formed at opposite ends of each textile arm and into which elastic members are inserted, the pocket parts extending through the ends of each textile arm to form a circular shape on the whole;
the circular elastic members inserted into the circular pocket parts;
plastic pads fixed to outer surfaces of the textile arms and having a plurality of spikes; and
chains connected between the plastic pads.

8. The tire mounted anti-skid apparatus as claimed in claim 7, wherein each elastic member includes a core made of silicon rubber and a textile sheath surrounding the core.

9. The tire mounted anti-skid apparatus as claimed in claim 7, further comprising coupling plates coupled with the plastic pads on rear surfaces ofthe textile arms with the textile arm interposed between the plastic pad and the coupling plate, and wherein the plastic pads are coupled with the coupling plates by the spikes.

10. The tire mounted anti-skid apparatus as claimed in claim 9, wherein:
each spike includes conical parts on opposite sides thereof, and a shaft between the conical parts;
each plastic pad and each coupling plate include spike holes corresponding to each other; and
each plastic pad and each coupling plate include spike retainers surrounding the spikes around the spike holes in which steps are formed respectively, each step including a hole in the center thereof such that the shaft of each spike is fitted therein.

11. The tire mounted anti-skid apparatus as claimed in claim 7, wherein each circular pocket part is coupled with tightening belts, each of which is looped over the circular pocket part between ends of the textile arms facing each other and pulls and tightens the circular pocket part.

12. The tire mounted anti-skid apparatus as claimed in claim 11, wherein each tightening belt is a flat belt, and includes a plurality of fixing holes in a lengthwise direction in one end thereof and a hook inserted into one of the fixing holes at the other end thereof.
